(19) Europäisches Patentamt
European Patent Office
Office européen des brevets

(11) Veröffentlichungsnummer : **0 061 119**
**B1**

(12) # EUROPÄISCHE PATENTSCHRIFT

(45) Veröffentlichungstag der Patentschrift : **26.09.84**

(51) Int. Cl.³ : **C 09 J 3/16**

(21) Anmeldenummer : **82102091.4**

(22) Anmeldetag : **15.03.82**

(54) **Klebstoffmischung auf Basis von thermoplastischen Polyamiden sowie deren Verwendung.**

(30) Priorität : **21.03.81 DE 3111206**

(43) Veröffentlichungstag der Anmeldung : **29.09.82 Patentblatt 82/39**

(45) Bekanntmachung des Hinweises auf die Patenterteilung : **26.09.84 Patentblatt 84/39**

(84) Benannte Vertragsstaaten : **AT BE CH DE FR GB IT LI LU NL SE**

(56) Entgegenhaltungen :
**DE-A- 1 745 446**
**DE-A- 2 754 233**
**US-A- 3 499 853**

(73) Patentinhaber : **Henkel Kommanditgesellschaft auf Aktien**
**Postfach 1100 Henkelstrasse 67**
**D-4000 Düsseldorf-Holthausen (DE)**
**AT BE CH DE FR GB IT LI LU NL SE**
**Chem-Plast SpA**
**Piazza Vetra 21**
**I-20123 Milano (IT)**
**IT**

(72) Erfinder : **Wiemers, Norbert, Dr.**
**Robert-Koch-Strasse 17**
**D-4019 Monheim (DE)**
Erfinder : **Albini, Italo, Dr.**
**Via Campari 81-F**
**I-80143 Pavia (IT)**

**EP 0 061 119 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft Klebstoffmischungen auf Basis von thermoplastischen polymerisierten Fettsäurekomponenten enthaltenden Polyamiden zusammen mit üblichen Hilfsstoffen sowie deren Verwendung als Schmelzkleber, Vergußmasse, Dichtungsmasse oder als durch Lösungsmittel aktivierbarer Klebstoff.

Es ist bekannt, thermoplastische Polyamide auf Basis von dimerisierter Fettsäure (vergleiche US-PS 3 377 303, 3 483 237 und 3 444 026) als Schmelzkleber zu verwenden. Die durchschnittlichen Anforderungen, welche bezüglich der Haftung Wärmefestigkeit und Alterungsbeständigkeit, insbesondere oberhalb von Raumtemperatur gestellt werden, können durch derartige Produkte erfüllt werden.

Die bekannten Schmelzklebstoffe auf Basis von thermoplastischen Polyamiden lassen jedoch unter wechselnder Temperaturbelastung hinsichtlich der Haftung und Abdichtfunktionen, insbesondere unterhalb des Gefrierpunktes noch zu wünschen übrig.

Es ist zwar bekannt, daß die thermoplastischen Polyamide, welche zusätzlich zu dimerisierter Fettsäure noch kurzkettige Polyetherdiamine enthalten und die unter Zusatz von kurzkettigen Diaminen hergestellt wurden, auch bei Temperaturen unterhalb des Gefrierpunktes noch eine gute Flexibilität zeigen. Allerdings läßt ihre Klebe- und Abdichteigenschaft bei Temperaturen unterhalb Raumtemperatur und in der Nähe des Gefrierpunktes noch erheblich zu wünschen übrig.

Aufgabe der vorliegenden Erfindung war es daher, solche thermoplastischen Klebstoffe, insbesondere Schmelzkleber zu entwickeln, die auch bei tiefen Temperaturen noch eine hervorragende Flexibilität aufweisen. Damit ist verbunden eine erhöhte Klebfestigkeit bei tiefen Temperaturen, wobei insbesondere unter Schälbedingungen hervorragende Werte gefunden werden.

Erfindungsgemäß wird diese Aufgabe gelöst durch Klebstoffmischungen, die dadurch gekennzeichnet sind, daß sie einen Gehalt an wenigstens zwei Polyamiden aufweisen, nämlich

I) 10 bis 90 Gewichtsprozent eines Polyamids, hergestellt aus
a) 35 bis 49,5 Mol-% dimeren Fettsäuren sowie
b) 0,5 bis 15 Mol-% monomeren Fettsäuren
einer Kettenlänge von 12 bis 22 Kohlenstoffatomen und
c) 2 bis 35 Mol-% Polyetherdiaminen der allgemeinen Formel

$$H_2N—R_1—O—(R\,O)_x—R_2—NH_2,$$

in der x eine Zahl zwischen 8 und 80, vornehmlich zwischen 8 und 40, $R_1$ und $R_2$ gleiche oder verschiedene aliphatische und/oder cycloaliphatische Kohlenwasserstoffreste und R einen gegebenenfalls verzweigten aliphatischen Kohlenwasserstoffrest mit 1 bis 6 Kohlenstoffatomen darstellt sowie
d) 15 bis 48 Mol-% aliphatischen Diaminen mit 2 bis 40 Kohlenstoffatomen im C-Gerüst,

II) 90 bis 10 Gewichtsprozent eines Polyamids, hergestellt aus
a) 20 bis 49,5 Mol-% dimeren Fettsäuren sowie
b) 0,5 bis 15 Mol-% monomeren Fettsäuren einer Kettenlänge von 12 bis 22 Kohlenstoffatomen und bis zu
c) 55 Mol-% eines wenigstens 2 primären Amino-gruppen tragenden Amins mit 2 bis 40 Kohlenstoffatomen im C-Gerüst.

Nach einer bevorzugten Ausführungsform der Erfindung ist das erste der einzusetzenden Polyamide hergestellt aus

a) 35 bis 49,5 Mol-% dimeren Fettsäuren,
b) 0,5 bis 15 Mol-% monomeren Fettsäuren,
c) 4 bis 10 Mol-% Polyetherdiaminen und
d) 40 bis 46 Mol-% aliphatischen Diaminen.

Weiterhin kann es sich günstig auswirken, wenn wenigstens das erste der beiden Polyamide noch zusätzlich mit 2 bis 25 Mol-% an aliphatischer Dicarbonsäure mit 4 bis 12 Kohlenstoffatomen im Molekül modifiziert worden ist. Das zweite der einzusetzenden Polyamide ist in der Regel ebenfalls mit Dicarbonsäuren modifiziert (vergleiche die zitierte US-PS).

Nach einer weiteren besonders bevorzugten Ausführungsform wurde das erste Polyamid hergestellt aus

a) einer dimerisierten Fettsäure mit einem Dimergehalt oberhalb 70 % sowie
b) 2 bis 10 Gewichtsprozent, bezogen auf dimerisierte Fettsäure, an Fettsäure mit 16/18 C-Atomen,
c) Bis-(3-aminopropyl)-polytetrahydrofuran eines Molekulargewichts zwischen 700 und 1 500 und/oder Bis-(2-aminopropyl)-polyoxypropylen eines Molekulargewichts zwischen 1 200 und 2 500 sowie
d) Diaminoethan, 1,3-Diaminopropan, 1,4-Diaminobutan und/oder Dimerdiamin.

Die erfingungsgemäß zu verwendenden thermoplastischen Polyamide werden hergestellt auf der Basis von sogenannten dimerisierten Fettsäuren, die häufig auch als polymere Fettsäuren bezeichnet werden. Die brauchbaren Typen sind handelsüblich und werden durch Polymerisation von ungesättigten Fettsäuren beziehungsweise deren Estern mit niederen Alkoholen erhalten. In den meisten Fällen überwiegt der dimere Anteil, der in der Regel über 50 % liegen soll. Selbstverständlich können auch noch Monocarbonsäuren in geringerer Menge vorhanden sein. Diese Monocarbonsäuren können 12 bis 22 Kohlenstoffatome aufweisen und auch noch Doppelbindungen oder Verzweigungen enthalten.

Bei den einzusetzenden Polyetheraminen handelt es sich ebenfalls um bekannte und zum erheblichen Teil handelsübliche Verbindungen. Sie enthalten endständig 2 primäre Aminogruppen und eine Polyetherkette von wenigstens 8 Einheiten.

Als typische Vertreter der Polyetherdiamine sind Bis-(2-aminopropyl)-polyoxypropylene und Bis-(3-aminopropyl)-polytetrahydrofurane zu nennen, die ein zwischen etwa 500 und 5 000 liegendes Molekulargewicht haben. Die hier besonders erwähnten Vertreter sind wegen ihrer leichten Verfügbarkeit bevorzugt. Selbstverständlich sind auch zwei endständige Aminogruppen enthaltende aus polymeren, gegebenenfalls verzweigtkettigen Butandiolen, Pentandiolen und Hexandiolen ausgebaute Polyether verwendbar. Auch könnten Mischether mit zwei primären Aminogruppen eingesetzt werden.

Bei der Herstellung der Polyamide werden neben den Etherdiaminen noch niedermolekulare Diamine zur Modifikation mitverwendet. Es handelt sich hierbei um für die Polyamidbildung an sich bekannte Diamine mit einer linearen und verzweigten Kette mit mehr als zwei Kohlenstoffatomen, wie zum Beispiel Ethylendiamin, 1,3-Diaminopropan und/oder 1,4-Diaminobutan, Neopentyldiamin, Hexamethylendiamin, Trimethylhexamethylendiamin. Weiterhin kommen Diamine in Betracht, die aus dimerisierten Fettsäuren erhalten wurden, wobei die Carboxylgruppen durch Amingruppen substituiert wurden. Produkte dieser Art werden häufig als Dimerdiamine bezeichnet. Als Beispiele für cycloaliphatische Diamine können Diaminodicyclohexylmethan, 3-Aminomethyl-3,5,5-trimethylcyclohexylamin, für aromatische Diamine Diaminodiphenylmethan, für arylaliphatische Amine Xylylendiamin und für heterocyclische Amine Piperazin, Dimethylaminopiperazin und Dipiperidylpropan genannt werden.

Zusätzlich zu den erfindungsgewesentlichen Carbonsäuren können — wie bereits vorstehend erwähnt — noch aliphatische Dicarbonsäuren mitverwendet werden. Hier kommen in erster Linie in Betracht : Adipinsäure, Azelainsäure, Sebacinsäure, Decandicarbonsäure.

Die erfindungsgemäß zu verwendenden Polyamide werden nach bekannten Verfahren durch Schmelzkondensation hergestellt. Dabei reagieren die Säurekomponenten mit den Aminkomponenten bei Temperaturen von 150 bis 250 °C, wobei das Reaktionswasser durch Destillation oder falls notwendig unter Verwendung eines azeotropen Lösungsmittels und/oder eines Vakuums entfernt werden kann. Durch geeignete Reaktionsführung und die Wahl eines geringfügigen Überschusses von Säurebeziehungsweise Aminfunktion kann in bekannter Weise auf Amin- beziehungsweise Säurezahl Einfluß genommen werden.

Die als zweites einzusetzenden Polyamide unterscheiden sich von den zuerst genannten dadurch, daß sie keine Polyethergruppen aufweisende Aminkomponente enthalten. Sie sind in den eingangs genannten Literaturstellen beschrieben.

Zweckmäßig enthalten die erfindungsgemäßen Klebmittel wachsartige Polyethylene oder Wachs selbst. Derartige Produkte sind im Handel verfügbar. Bevorzugt werden natürliche oder synthetische Wachse, die auf ein Kohlenwasserstoffgerüst beruhen, einschließlich Polyolefinwachsen und ihren Derivaten sowie ebenfalls mikrokristalline Wachse. Typische geeignete Vertreter sind die sogenannten Polyethylenwachse mit niederem bis mittlerem Molekulargewicht von etwa 1 500 bis 15 000. In vielen Fällen ist es günstig, Mischungen derartiger Harze zu verwenden.

Wie bei Schmelzklebstoffen allgemein üblich, ist zur Einstellung der geeigneten Klebrigkeit häufig ein klebrigmachendes Additiv erforderlich. Hier sind geeignet : klebrigmachende Kohlenwasserstoffharze, synthetische Harze, Polyterpene oder auch Harzderivate wie etwa der Hydroabiethylalkohol oder ähnliche. Die zuletzt genannten natürlichen Harze haben nicht nur günstig klebrigmachende Eigenschaften bei tiefen Temperaturen, sondern erleichtern auch noch das Fließen der Schmelze und führen damit zu einer optimalen Benetzung der Klebefläche.

Neben den vorgenannten Mischungsbestandteilen können die erfindungsgemäßen Klebstoffe noch in der Regel bis zu 10 % weiterer Hilfsstoffe enthalten. Hier kommen etwa in Betracht : Antioxidantien, Stabilisatoren gegen Licht- oder den Wärmeabbau, Füllstoffe wie Bariumsulfat, Calciumcarbonat, Titandioxid oder auch Pigmente sowie Konservierungsmittel und Fungizide.

Die Applikation der erfindungsgemäßen Schmelzklebstoffe erfolgt im allgemeinen aus der Schmelze über Förder- oder Dosiereinrichtungen. Die Schmelze kann auf Vorrat gehalten werden oder durch Abschmelzen von Formkörpern wie Zylindern, Fäden, Drähten oder sonstigen Profilen gewonnen werden. Unmittelbar nach in Berührungbringen des flüssigen Klebstoffilms sollte die Klebefläche unter leichtem Druck miteinander verbunden werden.

Darüber hinaus ist es selbstverständlich möglich, auch in geeigneten Lösungsmitteln die neuen Klebstoffe aufzulösen und auf diese Art und Weise zu applizieren. In der Regel ist es dann notwendig, durch Wärmeeinwirkung den klebfähigen Zustand zu reaktivieren. Dies gilt insbesondere für den Fall, daß eine der beiden zu verklebenden Flächen nicht durchlässig für das verwendete Lösungsmittel ist. Schließlich ist es auch möglich, in geeigneter wäßriger Dispersion den Klebstoff aufzutragen.

Die Anwendungsmöglichkeit der erfindungsgemäßen Klebstoffe ist breit gestreut, und es sei nur auf wenige Einsatzgebiete hingewiesen :

Verguß von elektrischen Anschlüssen an Motoren, Scheinwerferverklebungen, Kühlschlangenmontage, Montage von Möbeln bei Verwendung von Kunststoffen und oberflächenvergüteten Hölzern, Klebe- und Abdichtebeschichtungen in wärmerückstellfähigen Produkten wie Schrumpfschläuchen oder Schrumpfkappen.

Diesen Anwendungen gemeinsam ist die Aufgabe, unterschiedliche Materialien zu verbinden, gegebenenfalls auch Montagespalte abzudichten und nach der Montage-Dauerfestigkeit und Dichtigkeit über einen weiten Temperaturbereich auch unterhalb des Gefrierpunktes zu gewährleisten.

Folgende Prüfverfahren wurden zur Beurteilung herangezogen :

1. R + B (Erweichungspunkt)

Der Erweichungspunkt °C wurde nach der Ring + Ball-Methode (R + B) nach ASTM E — 28 gemessen.

2. Viskosität

Die Viskosität mPa.s wurde unter Verwendung eines Brookfield Thermocel Viscosimeters Typ RVT mit der Spindel SC 4-27 bei 160 °C gemessen.

3. Zugscherfestigkeit

Die Zugscherfestigkeit wurde in Anlehnung an DIN 53283 bestimmt.

Werkstoff :
1. Aluminium : Al Cu Mg 2 x platiniert
2. Polycarbonat : Makrolon farblos nach DIN 7744

Prüfkörper : 100 × 25 × 2 mm Überlappung 12,5 mm

Vorbehandlung :
1. Polycarbonat Entfetten mit Benzin
2. Aluminium
   a) Entfetten mit Benzin, anschließend
   b) Beizen

25 g Natriummetasilikat ($N_2SiO_3 \cdot 9H_20$ werden in 100 ml destilliertem Wasser gelöst, und zur Lösung werden 2,5 g Addukt von 6 EO an Nonylphenol zugesetzt. Die Lösung wird auf 70 °C erwärmt, 25 mm der Aluflächen werden in die Reinigungsflüssigkeit für 5 Minuten getaucht, wonach die Metallplatten reichlich mit destilliertem Wasser gespült und getrocknet werden.

Verklebung von Aluminium :

Der Klebstoff wird auf eine der gereinigten Aluplatten in einer ebenen Schicht aufgetragen. Eine zweite gereinigte und vorbehandelte Platte wird darauf gelegt mit Überlappung min. 12,5 mm — max. 14,5 mm, dann in einem Heizschrank bei 200 °C unter Druck $35 \cdot 10^{-3}$ N/mm² 20 Minuten aufbewahrt.

Verklebung von Polycarbonat

Beide Überlappungsflächen werden mit Klebstoff beschichtet und direkt verklebt.

Konditionierung : 24 h bei 20 °C

Prüfung : 20 °C beziehungsweise 0 °C, 50 mm Abzugsgeschwindigkeit.

4. Schälfestigkeit

Die Schälfestigkeit wurde als T-peel-Test durchgeführt.

Werkstoff : Polyethylen-Folie (Baylon V 22 E 464)

Prüfkörper : 120 × 25 × 0,2 mm Überlappung 80 mm

Vorbehandlung : Coronabehandlung

Verklebung : Überlappungsfläche einseitig mit Klebstoff beschichtet und direkt verklebt

Konditionierung : 24 h bei 20 °C

5. Prüfung

20 °C bzw. 0 °C, 100 mm Abzugsgeschwindigkeit.

6. Mandrel-Test

Ein Film mit den Maßen 200 × 25,4 × 1 mm wird um einen Dorn mit dem Durchmesser 25,4 mm um 180 °C gebogen. Dorn und Teststreifen werden 4 Std. bei der Prüftemperatur konditioniert. Es wurden jeweils 10 Prüfkörper geprüft.

Beispiele

Zur Bereitung der Schmelzkleber wurden zunächst in bekannter Weise thermoplastische Polyamide hergestellt. In der nachfolgenden Tabelle 1 sind die Mengen der eingesetzten Fettsäuren und der Amine in Gewichtsteilen (g) sowie die resultierenden Amin- und Säurezahlen wiedergegeben.

Tabelle 1

| Polyamid | A | B | C | D |
|---|---|---|---|---|
| polym. Fettsäure (mono 1 %; dim. 95 %; trim. 4 %)- FSI | 265,0 | 265,0 | - | 285,0 |
| polym. Fettsäure (mono 3 %; dim. 75 %; trim. 22 %)FSII | - | - | 265,0 | - |
| Stearinsäure | 28,5 | 19,9 | 19,9 | - |
| Diaminoethan | 28,9 | 27,7 | 27,0 | 27,6 |
| Bis-(3-aminopropyl)-poly-tetrahydrofuran (MG 750) | - | - | 37,5 | - |
| Bis-(3-aminopropyl)-poly-tetrahydrofuran (MG 1 100) | 42,9 | 41,2 | - | - |
| Bis-(2-aminopropyl)-poly-propylenoxid (MG 2 000) | - | - | - | 120,0 |
| Aminzahl<br>Säurezahl | 5,5<br>1,4 | 1,0<br>7,6 | 0,7<br>9,8 | 2,9<br>1,4 |

Die Klebstoffe wurden durch Zusammenschmelzen unter intensivem Rühren der neuen Polyamide A bis D und der thermoplastischen Polyamide I und II sowie von wachsartigem handelsüblichem Polyethylen (Erweichungspunkt 106 °C) und Hydroabiethylalkohol hergestellt. Basis für die Polyamide I + II war eine handelsübliche dimerisierte Fettsäure (2 % monomere, 93 % dimere, Rest höherpolymere Anteile). Auf 100 Gewichtsteile dieser Säure wurden eingesetzt : 8,3 Gewichtsteile Diaminoethan und 25,7 Gewichtsteile Dimerdiamin (Polyamid I) beziehungsweise 28 Gewichtsteile Azelainsäure, 5,3 Gewichtsteile Diaminoethan und 21 Gewichtsteile Piperazin (Polyamid II).

In der nachfolgenden Tabelle ist in Abhängigkeit von der laufenden Nummer des Beispiels angegeben die eingesetzte Menge an Polyamid A bis D sowie I und II, an Polyethylen und Hydroabiethylalkohol in g. Es folgen die Viskosität bei 160 °C in mPa.s, die Erweichungstemperatur R + B in °C, der Mandrel-Test 50 % Bruch in °C sowie Zugscherfestigkeit Al/Al in N/mm² (Kohäsionsbruch).

(Siehe Tabelle 2 Seite 6 f.)

Tabelle 2

| Beispiel Nr. | 1 | 2 | 3 | 4 |
|---|---|---|---|---|
| Polyamid A | 17 | - | - | - |
| Polyamid B | - | 17 | - | - |
| Polyamid C | - | - | 17 | - |
| Polyamid D | - | - | - | 17 |
| Polyamid I | 30 | 30 | 30 | 30 |
| Polyamid II | 15 | 15 | 15 | 15 |
| Polyethylen | 15 | 15 | 15 | 15 |
| Hydroabiethylalkohol | 25 | 25 | 25 | 25 |
| Viskosität | 10 700 | 16 500 | 17 100 | 15 300 |
| Erweichungspunkt | 95 | 97 | 98 | 93 |
| Mandrel-Test | - 37,5°C | - 37,5°C | - 37,5°C | - 42,5° |
| Zugscherfestigkeit | 4,3 | 5,4 | 5,6 | 5,8 |

Vergleichsversuch a) und b)

Wurde anstelle der Polyamide 17 g eines solchen verwendet, das aus 256,5 g FSII, 28,5 g Stearinsäure, 21,7 g Diaminoethan und 30,5 g 1,13-Diamino-trioxa(4,7,10)-tridecan kondensiert war (Aminzahl 3,2 ; Säurezahl 5,2), so ergab sich für den Mandreltest nur – 25°C, während die Zugscherfestigkeit bei 4,7 N/mm² lag. Wurde kein Polyamid A bis D, sondern nur Polyamid I und II in einer Menge von 30 und 15 g eingesetzt, lagen die Werte wie folgt: Mandreltest – 15 °C, Zugscherfestigkeit 3,2 N/mm² (Die anderen Bestandteile der Rezeptur wurden konstant gehalten.)

Es wurden noch folgende Polyamide hergestellt aus jeweils

285,0 g dimerisierter Fettsäure (FSI)
21,1 g Diaminoethan
57,8 g Dimerdiamin (über Amid und Hydrierung hergestelltes Diamin) sowie
56,2 g Bis-(3-aminpropyl)-polytetrahydrofuran (MG 750) oder aber
150,0 g Bis-(2-aminopropyl)-polypropylenoxid (MG 2 000)

Polyamide E und F mit der Aminzahl 5,5 beziehungsweise 2,1 und den Säurezahlen 1,2 und 1,2.

In der nachfolgenden Tabelle 3 ist in Abhängigkeit von der laufenden Nummer des Beispiels wiedergegeben die Zusammensetzung der Klebstoffe in Gewichtsteilen (g).

(Siehe Tabellen Seite 7 f.)

Tabelle 3

| Beispiel Nr. | 5 | 6 | 7 | 8 | 9 | 10 |
|---|---|---|---|---|---|---|
| Polyamid E | 47 | 52 | 57 | 42 | 52 | - |
| Polyamid F | - | - | - | - | - | 47 |
| Polyamid II | 15 | 15 | 15 | 15 | 15 | 15 |
| Polyethylen | 15 | 15 | 15 | 20 | 10 | 15 |
| Hydroabiethyl-alkohol | 23 | 18 | 13 | 23 | 23 | 23 |

In der nachfolgenden Tabelle 4 sind in Abhängigkeit von den Beispielen wiedergegeben, die bei 160 °C gemessene Viskosität (mPa.s) sowie der Erweichungspunkt (R + b) in °C. Es folgen der Mandreltest, die Schälfestigkeit PE/PE in N/25 mm, die Zugscherfestigkeit für PC/PC und Al/Al jeweils bei 20 °C und 0 °C in N/mm².

Tabelle 4

| Beispiel Nr. | 5 | 6 | 7 | 8 | 9 | 10 |
|---|---|---|---|---|---|---|
| Viskosität | 16 500 | 22 000 | 29 000 | 36 000 | 11 200 | 17 200 |
| Erweichung °C | 90 | 95 | 96 | 101 | 84 | 91 |
| Mandreltest | -37,5°C | -35,0 | -32,5 | -35,0 | -30,0 | -40,0 |
| Schälfestigkeit PE/PE 20° C | 34,0 | 38,3 | 36,7 | 21,8 | 47,9 | 38,5 |
| 0° C | 19,8 | 15,8 | 16,4 | 13,0 | 28,8 | 20,1 |
| Zugscherfestigkeit PC/PC 20° C | 1,4 | 1,7 | 1,4 | 1,6 | 1,9 | 1,5 |
| 0° C | 2,3 | 2,4 | 2,8 | 1,8 | 2,6 | 2,6 |
| Zugscherfestigkeit Al/Al 20° C | 3,4 | 4,2 | 4,2 | 3,1 | 4,4 | 3,5 |
| 0° C | 9,1 | 11,2 | 11,3 | 9,4 | 9,9 | 10,2 |

Vergleichsversuch c) und d)

Es wurden zu einem Schmelzkleber gemischt :

c) 47 g Polyamid I
15 g Polyamid II
15 g Polyethylen
23 g Dihydroabiethylalkohol

d) 37 g Polyamid I
25 g Polyamid II
15 g Polyethylen
23 g Dihydroabiethylalkohol

Für den Mandreltest wurde gefunden :
c) −27,5 °C und d) −28,0 °C
Die Schälfestigkeit für PE/PE betrug :

c) 20,6 N/25 mm bei 20 °C und
5,6 N/25 mm bei 0 °C sowie

d) 18,2 N/25 mm bei 20 °C und
5,5 N/25 mm bei 0 °C

**Ansprüche :**

1. Klebstoffmischungen auf Basis von thermoplastischen polymerisierten Fettsäurekomponenten enthaltenden Polyamiden sowie üblichen Hilfsstoffen, gekennzeichnet durch einen Gehalt an wenigstens zwei Polyamiden, nämlich

I) 10 bis 90 Gewichtsprozent eines Polyamids, hergestellt aus
a) 35 bis 49,5 Mol-% dimeren Fettsäuren sowie
b) 0,5 bis 15 Mol-% monomeren Fettsäuren einer Kettenlänge von 12 bis 22 Kohlenstoffatomen und
c) 2 bis 35 Mol-% Polyetherdiaminen der allgemeinen Formel

$$H_2N—R_1—O—(R\,O)_x—R_2—NH_2,$$

in der x eine Zahl zwischen 8 und 80, vornehmlich zwischen 8 und 40, $R_1$ und $R_2$ gleiche oder verschiedene aliphatische und/oder cycloaliphatische Kohlenwasserstoffreste und R einen gegebenenfalls verzweigten aliphatischen Kohlenwasserstoffrest mit 1 bis 6 Kohlenstoffatomen darstellt sowie
d) 15 bis 48 Mol-% aliphatischen Diaminen mit 2 bis 40 Kohlenstoffatomen im C-Gerüst,

II) 90 bis 10 Gewichtsprozent eines Polyamids, hergestellt aus
a) 20 bis 49,5 Mol-% dimeren Fettsäuren sowie
b) 0,5 bis 15 Mol-% monomeren Fettsäuren einer Kettenlänge von 12 bis 22 Kohlenstoffatomen und bis zu
c) 55 Mol-% eines wenigstens 2 primären Aminogruppen tragenden aliphatischen beziehungsweise cycloaliphatischen Amins mit 2 bis 40 Kohlenstoffatomen im von Heteroatomen freien C-Gerüst.

2. Klebstoff nach Anspruch 1, dadurch gekennzeichnet, daß das erste Polyamid hergestellt wurde aus

a) 35 bis 49,5 Mol-% dimeren Fettsäuren,
b) 0,5 bis 15 Mol-% monomeren Fettsäuren,
c) 4 bis 10 Mol-% Polyetherdiaminen und
d) 40 bis 46 Mol-% aliphatischen Diaminen.

3. Klebstoff nach Ansprüchen 1 und 2, dadurch gekennzeichnet, daß bei der Kondensation wenigstens eines Polyamids noch zusätzlich 2 bis 25 Mol-% an aliphatischer Dicarbonsäure mit 4 bis 12 Kohlenstoffatomen im Molekül eingesetzt wurden.

4. Klebstoff nach den Ansprüchen 1 bis 3, dadurch gekennzeichnet, daß man als erstes Polyamid ein solches verwendet, das hergestellt wurde aus

a) einer dimerisierten Fettsäure mit einem Dimergehalt oberhalb 70 % sowie
b) 2 bis 10 Gewichtsprozent, bezogen auf dimerisierte Fettsäure, an Fettsäure mit 16/18 C-Atomen,
c) Bis-(3-aminopropyl)-polytetrahydrofuran eines Molekulargewichts zwischen 700 und 1 500 und/oder Bis-(2-aminopropyl)-polyoxypropylen eines Molekulargewichts zwischen 1 200 und 2 500 sowie
d) Diaminoethan, 1,3-Diaminopropan, 1,4-Diaminobutan und/oder Dimeramin mit dem C-Gerüst dimerer Fettsäuren.

5. Klebstoff nach den Ansprüchen 1 bis 4, dadurch gekennzeichnet, daß er als Hilfsstoffe Polyethylen, Wachse, klebrigmachende Harze, Füllstoffe, Pigmente und/oder Stabilisatoren enthält.

6. Verwendung der Klebstoffmischung nach den Ansprüchen 1 bis 5 als Schmelzkleber und/oder Verguß- und Abdichtmasse.

7. Verwendung als Klebstoffmischung nach den Ansprüchen 1 bis 5 als Lösungsmittel enthaltender oder durch Lösungsmittel aktivierbarer Kleber.

8. Verwendung als Klebstoffmischung nach den Ansprüchen 1 bis 5 als Dispersion in wäßrigem Medium.

**Claims**

1. Adhesive mixtures based on thermoplastic polyamides containing polymerized fatty acid components and the usual auxiliaries, characterized by a content of at least two polyamides, namely

I) from 10 to 90 % by weight of a polyamide produced from
a) 35 to 49.5 mole percent of dimeric fatty acids and
b) 0.5 to 15 mole percent of monomeric fatty acids having a chain length of 12 to 22 C-atoms and
c) 2 to 35 mole percent of polyether diamines corresponding to the general formula

$$H_2N—R_1—O—(R\,O)_x—R_2—NH_2,$$

in which x is a number of from 8 to 80 and mainly from 8 to 40, $R_1$ and $R_2$ are the same or different and represent aliphatic and/or cycloaliphatic hydrocarbon radicals and R is an optionally branched aliphatic hydrocarbon radical containing from 1 to 6 C-atoms, and
d) 15 to 48 mole percent of aliphatic diamines containing from 2 to 40 carbon atoms in the C-chain,

II) from 90 to 10 % by weight of a polyamide produced from
a) 20 to 49.5 mole percent of dimeric fatty acids and
b) 0.5 to 15 mole percent of monomeric fatty acids having a chain length of from 12 to 22 C-atoms and up to
c) 55 mole percent of an aliphatic or cycloaliphatic amine containing at least 2 primary amino groups and from 2 to 40 C-atoms in the C-chain free from hetero atoms.

2. An adhesive as claimed in Claim 1, characterized in that the first polyamide is produced from

a) 35 to 49.5 mole percent of dimeric fatty acids,
b) 0.5 to 15 mole percent of monomeric fatty acids,
c) 4 to 10 mole percent of polyether diamines and
d) 40 to 46 mole percent of aliphatic diamines.

3. An adhesive as claimed in Claims 1 and 2, characterized in that from 2 to 25 mole percent of an aliphatic dicarboxylic acid containing from 4 to 12 C-atoms in the molecule are additionally used in the condensation of at least one polyamide.

4. An adhesive as claimed in Claims 1 to 3, characterized in that a polyamide produced from

a) a dimerized fatty acid having a dimer content of more than 70 % and
b) from 2 to 10 % by weight, based on dimerized fatty acid, of a $C_{16}$-$C_{18}$-fatty acid,
c) bis-(3-aminopropyl)-polytetrahydrofuran having a molecular weight of from 700 to 1 500 and/or bis-(2-aminopropyl)-polyoxypropylene having a molecular weight of from 1 200 to 2 500 and
d) diaminoethane, 1,3-diaminopropane, 1,4-diaminobutane and/or dimeramine having the C-chain of dimeric fatty acids,

is used as the first polyamide.

5. An adhesive as claimed in Claims 1 to 4, characterized in that it contains polyethylene, waxes, tackifying resins, fillers, pigments and/or stabilizers as auxiliaries.

6. The use of the adhesive mixture claimed in Claims 1 to 5 as a hotmelt adhesive and/or as a pouring and sealing compound.

7. The use of the adhesive mixture claimed in Claims 1 to 5 as a solvent-containing or solvent-activatable adhesive.

8. The use of the adhesive mixture claimed in Claims 1 to 5 in the form of a dispersion in aqueous medium.

**Revendications**

1. Mélanges adhésifs à base de polyamides thermoplastiques contenant des composants acides gras polymérisés de même que des auxiliaires usuels, caractérisés par une teneur en au moins deux polyamides, à savoir

I) 10 à 90 % en poids d'une polyamide préparée à partir de
a) 35 à 49,5 moles % d'acides gras dimères, de même que de
b) 0,5 à 15 moles % d'acides gras monomères d'une longueur de chaîne de 12 à 22 atomes de carbone et de

c) 2 à 35 moles % de polyétherdiamines de formule générale

$$H_2N—R_1—O—(RO)_x—R_2—NH_2,$$

dans laquelle x est un nombre entre 8 et 80, de préférence entre 8 et 40, $R_1$ et $R_2$ sont des radicaux hydrocarbonés aliphatiques et/ou cycloaliphatiques identiques ou différents et R représente un radical hydrocarboné aliphatique éventuellement ramifié ayant 1 à 6 atomes de carbone, de même que de

d) 15 à 48 moles % de diamines aliphatiques ayant 2 à 40 atomes de carbone dans le squelette de carbone,

II) 90 à 10 % en poids d'une polyamide, préparée à partir de

a) 20 à 49,5 moles % d'acides gras dimères, de même que de

b) 0,5 à 15 moles % d'acides gras monomères d'une longueur de chaîne de 12 à 22 atomes de carbone et de jusqu'à

c) 55 moles % d'une amine aliphatique ou cycloaliphatique portant au moins 2 groupes amino primaires et ayant 2 à 40 atomes de carbone dans le squelette de carbone exempt d'hétéroatomes.

2. Adhésif selon la revendication 1, caractérisé en ce que la première polyamide a été préparée à partir de

a) 35 à 49,5 moles % d'acides gras dimères,
b) 0,5 à 15 moles % d'acides gras monomères,
c) 4 à 10 moles % de polyétherdiamines et de
d) 40 à 46 moles % de diamines aliphatiques.

3. Adhésif selon les revendications 1 et 2, caractérisé en ce que dans la condensation d'au moins une polyamide on utilise en plus 2 à 25 moles % d'acide dicarboxylique aliphatique ayant 4 à 12 atomes de carbone dans la molécule.

4. Adhésif selon les revendications 1 à 3, caractérisé en ce qu'on utilise comme première polyamide une qui a été préparée à partir

a) d'un acide gras dimérisé ayant une teneur en dimère supérieure à 70 %, de même que de

b) 2 à 10 % en poids, par rapport à l'acide gras dimérisé, d'acide gras ayant 16/18 atomes de carbone,

c) de bis-(3-aminopropyl)-polytétrahydrofuranne d'un poids moléculaire entre 700 et 1 500 et/ou de bis-(2-aminopropyl)-polyoxypropylène d'un poids moléculaire entre 1 200 et 2 500, de même que

d) de diaminoéthane, de 1,3-diaminopropane, de 1,4-diaminobutane et/ou d'une amine dimère ayant le squelette carboné des acides gras dimères.

5. Adhésif selon les revendications 1 à 4, caractérisé en ce qu'il contient comme auxiliaires du polyéthylène, des cires, des résines apportant du collant, des charges, des pigments et/ou des stabilisants.

6. Utilisation du mélange adhésif selon les revendications 1 à 5 comme adhésif à fondre et/ou comme masse de scellage et d'étanchéisation.

7. Utilisation du mélange adhésif selon les revendications 1 à 5 sous la forme d'un adhésif contenant un solvant ou activable par un solvant.

8. Utilisation du mélange adhésif selon les revendications 1 à 5 sous la forme de dispersion dans un milieu aqueux.